# EUROPÄISCHE PATENTSCHRIFT

(11) **EP 1 478 986 B1**
(45) Veröffentlichungstag und Bekanntmachung des Hinweises auf die Patenterteilung: **09.05.2007**
(21) Anmeldenummer: 02787391.8
(22) Anmeldetag: 25.11.2002
(51) Int. Cl.: G05B 13/02, F02D 41/14

(54) **VERFAHREN UND VORRICHTUNG ZUR REGELUNG DER DREHZAHL EINER BRENNKRAFTMASCHINE**
METHOD AND DEVICE FOR CONTROLLING THE SPEED OF AN INTERNAL COMBUSTION ENGINE
PROCEDE ET DISPOSITIF POUR LA REGULATION DU REGIME D'UN MOTEUR A COMBUSTION INTERNE

(30) Priorität: 09.02.2002 DE 10205375
(43) Veröffentlichungstag der Anmeldung: 24.11.2004
(73) Patentinhaber: ROBERT BOSCH GMBH, 70442 Stuttgart (DE)
(72) Erfinder: WAGNER, Horst, 70469 Stuttgart (DE); FEHRMANN, Ruediger, 71229 Leonberg (DE); BISCHOFF, Bjoern, 70825 Korntal-Muenchingen (DE); HEINZE, Sabine, 70499 Stuttgart (DE)
(86) Internationale Anmeldenummer: PCT/DE2002/004311
(87) Internationale Veröffentlichungsnummer: WO 2003/067342

(56) Entgegenhaltungen:
- EP-A- 0 554 479
- DE-A- 10 010 377
- DE-A- 19 711 787
- DE-C- 4 016 018

## Beschreibung

### Stand der Technik

Die Erfindung betrifft ein Verfahren und eine Vorrichtung zur Regelung der Drehzahl der Brennkraftmaschine.

Verfahren und Vorrichtungen zur Regelung der Drehzahl der Brennkraftmaschine, sind bekannt. Bei solchen Systemen wirken üblicherweise wenigstens ein Leerlaufregler und eine Stellgröße, die vom Fahrerwunsch, der über eine Fahrpedalstellung erfasst wird, zusammen. Dabei wirken eine Steuergröße, die dem Fahrerwunschmoment entspricht, das ausgehend von der Fahrpedalstellung vorgegeben wird, und eine Stellgröße eines Reglers, der dem Moment des Leerlaufreglers entspricht, zusammen. Dabei soll die Steuergröße, d. h. das Fahrerwunschmoment, den Leerlaufregler, d. h. das Moment des Leerlaufreglers, überdrücken. Überdrücken bedeutet, dass der Leerlaufregler keine Auswirkung auf die Regelgröße besitzt, wenn das Fahrerwunschmoment größer als das Moment des Leerlaufreglers ist. Dadurch wird eine Erhöhung der Drehzahl möglich, wenn der Fahrer Gas gibt. Andererseits soll der Regler ein Unterschreiten der Leerlaufdrehzahl verhindern. In diesem Fall, wenn der Fahrer kein Gas gibt, überdrückt der Regler die Steuergröße.

Die DE 40 16 018 C1 beschreibt eine Schaltungsanordnung zur Prozessregelung, insbesondere zur Regelung eines Durchflusses. Hierbei tritt die Problematik auf, dass die Istwerterfassung einen großen Messbereich abdeckt, wobei der entsprechende Sensor in unterschiedlichen Messbereichen unterschiedliche Genauigkeiten aufweist, d. h. um eine genaue Regelung erzielen zu können, werden für unterschiedliche Messbereiche unterschiedliche Messwertaufnehmer zu erfassen des Istwertes verwendet. Diese beiden Messwerte werden zwei Reglern zugeführt, denen im wesentlichen derselbe Sollwert zugeführt wird. Zur Anpassung an die Eigenschaften der Istwerterfassung, ist vorgesehen, dass in einem Zweig der Sollwert entsprechend gefiltert wird.

Bei der Regelung der Drehzahl einer Brennkraftmaschine stellt sich die Aufgabe, dass auch bei unterschiedlichen Funktionalitäten, mit Hilfe der Regelung ein zulässiges Drehzahlintervall eingehalten wird, wobei gleichzeitig ein steuernder Eingriff, insbesondere durch den Fahrer, möglich sein soll.

Diese Aufgabe wird dadurch gelöst, dass wenigstens ein erster Regler, ausgehend von einem Vergleich zwischen einem ersten Sollwert und einem Istwert eine erste Stellgröße vorgibt und diese erste Stellgröße derart auf einen ersten Stellbereich begrenzt wird, dass die zu regelnde Größe abnimmt und dass wenigstens ein zweiter Regler, ausgehend von einem Vergleich zwischen einem zweiten Sollwert und dem Istwert eine zweite Stellgröße vorgibt und diese zweite Stellgröße derart auf einen zweiten Stellbereich begrenzt wird, dass die zu regelnde Größe zunimmt.

Das heißt der erste Regler liefert die Stellgrößen nur innerhalb eines bestimmten Stellbereichs. Der zweite Regler liefert die Stellgröße nur innerhalb eines zweiten Stellbereichs. Sowohl der erste als auch der zweiten Regler sind vorzugsweise als Proportionalregler oder als Proportional- und Integralregler ausgebildet. Beim Beispiel eines Drehzahlreglers, der diese über die Kraftstoffmenge regelt, bedeutet dies, dass der erste Regler die Kraftstoffmenge nur verringern und der zweite Regler die Kraftstoffmenge nur erhöhen kann.

Abhängig von den an den Regler gestellten Anforderungen, werden unterschiedliche Sollwerte vorgegeben. Besonders vorteilhaft ist es, wenn die Sollwerte abhängig vom Betriebszustand vorgegeben werden. Dabei ist der erste Sollwert immer größer oder gleich dem zweiten Sollwert.

Um ein unerwünschtes Verhalten des Regelkreises zu vermeiden, ist für den Fall, dass beide Regler eine Stellgröße bereitstellen vorgesehen, dass die Stellgröße mit der betragsmäßig größten Änderung zur Ansteuerung verwendet wird. In diesem Fall ist besonders vorteilhaft, dass die Stellgröße des anderen Reglers, dass heißt des Reglers mit der betragsmäßig kleinsten Änderung, eingefroren wird.

Von besonderer Bedeutung sind weiterhin die Realisierungen in Form eines Computerprogramms mit Programmcode-Mitteln und in Form eines Computerprogrammprodukts mit Programmcode-Mitteln. Das erfindungsgemäße Computerprogramm weist Programmcode-Mittel auf, um alle Schritte des erfindungsgemäßen Verfahrens durchzuführen, wenn das Programm auf einem Computer, insbesondere einem Steuergerät für eine Brennkraftmaschine eines Kraftfahrzeugs, ausgeführt wird. In diesem Fall wird also die Erfindung durch ein in dem Steuergerät abgespeichertes Programm realisiert, so dass dieses mit dem Programm versehene Steuergerät in gleicher Weise die Erfindung darstellt wie das Verfahren, zu dessen Ausführung das Programm geeignet ist. Das erfindungsgemäße Computerprogrammprodukt weist Programmcode-Mittel auf, die auf einem computerlesbaren Datenträger gespeichert sind, um das erfindungsgemäße Verfahren durchzuführen, wenn das Programmprodukt auf einem Computer, insbesondere einem Steuergerät für eine Brennkraftmaschine eines Kraftfahrzeugs ausgeführt wird. In diesem Fall wird also die Erfindung durch einen Datenträger realisiert, so dass das erfindungsgemäße Verfahren ausgeführt werden kann, wenn das Programmprodukt bzw. der Datenträger in ein Steuergerät für eine Brennkraftmaschine insbesondere eines Kraftfahrzeugs integriert wird. Als Datenträger bzw. als Computerprogrammprodukt kann insbesondere ein elektrisches Speichermedium zur Anwendung kommen, beispielsweise ein Read-Only-Memory (ROM), ein EPROM oder auch ein elektrischer Permanentspeicher wie beispielsweise eine CD-ROM oder DVD.

Die Erfindung wird nachstehend anhand der in der Zeichnung dargestellten Ausführungsform erläutert.

Es zeigen
Figur 1 ein Blockdiagramm der erfindungsgemäßen Vorgehensweise,
Figur 2 eine detaillierte Darstellung der Regelstruktur und
Figur 3 ein Flussdiagramm zur Verdeutlichung der erfindungsgemäßen Vorgehensweise.

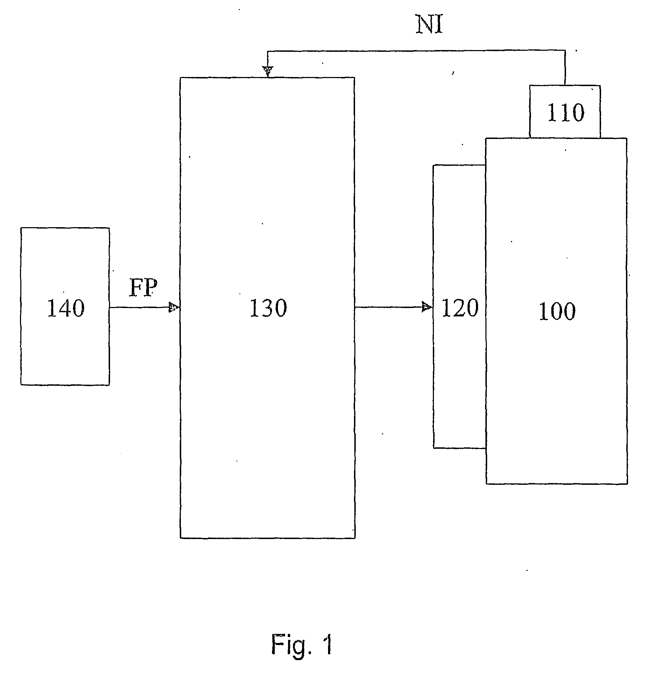

In Figur 1 ist eine Vorrichtung zur Steuerung einer Brennkraftmaschine dargestellt. Die Brennkraftmaschine ist mit 100 bezeichnet. An der Brennkraftmaschine sind verschiedene Sensoren angeordnet, die verschiedene Signale erfassen. Insbesondere ist ein Drehzahlsensor 110 vorgesehen, der ein Signal NI liefert, das der gemessenen Drehzahl der Brennkraftmaschine entspricht.

Des Weiteren sind an der Brennkraftmaschine 100 verschiedene Stellelemente 120 angeordnet, die die Leistungsabgabe der Brennkraftmaschine und damit die Drehzahl der Brennkraftmaschine beeinflussen. Insbesondere sind Stellelemente 120 vorgesehen, die das von der Brennkraftmaschine bereitgestellte Moment insbesondere über die eingespritzte Kraftstoffmenge steuern.

Das Stellelement 120 wird vorzugsweise von einer Steuereinheit 130 mit Ansteuersignalen beaufschlagt. Das Ausgangssignal NI des Sensors 110 gelangt ebenfalls zur Steuereinheit 130. Des Weiteren werden der Steuereinheit 130 Signale weiterer Sensoren 140 zugeleitet. Hierbei handelt es sich insbesondere um ein Signal FP, das den Fahrerwunsch charakterisiert. Hierzu wird insbesondere ein Fahrpedalstellungsgeber verwendet.

Diese Steuereinheit berechnet ausgehend von dem Fahrerwunsch FP und der Ist-Drehzahl NI ein Ansteuersignal zur Beaufschlagung der Stellelemente 120. Zur Regelung und/oder Steuerung der Drehzahl sind, insbesondere bei Dieselbrennkraftmaschinen ein Leerlaufregler, ein Arbeitsdrehzahlregler, ein Fahrgeschwindigkeitsregler, ein Enddrehzahlregler, eine Höchstgeschwindigkeitsabregelung, ein allgemeiner Drehzahlregler und/oder ein Drehzahlregler vorgesehen. Zur Einhaltung einer Drehzahlobergrenze dienen insbesondere der Enddrehzahlregler, der Arbeitsdrehzahlregler und/oder der Fahrgeschwindigkeitsregler. Der Leerlaufregler gewährleistet, dass die Drehzahl der Brennkraftmaschine nicht unter die Leerlaufdrehzahl abfällt. Der Fahrgeschwindigkeitsregler bewirkt, dass die Drehzahl einen bestimmten Wert, der der gewünschten Fahrgeschwindigkeit entspricht, einhält. Entsprechend gewährleistet der Arbeitsdrehzahlregler, dass die Drehzahl nicht unter eine gewünschte Arbeitsdrehzahl abfällt.

Der Enddrehzahlregler und der Höchstgeschwindigkeitsabregler gewährleisten die Einhaltung einer Drehzahlobergrenze. Der Enddrehzahlregler gewährleistet insbesondere, dass eine höchstzulässige Drehzahl nicht erreicht wird. Die Höchstgeschwindigkeitsabregelung gewährleistet, dass eine Drehzahl, die einer gewünschten Höchstgeschwindigkeit oder einer zulässigen Höchstgeschwindigkeit entspricht, nicht überschritten wird. Der Sonderfall, dass die Drehzahlobergrenze der Drehzahluntergrenze entspricht, ist insbesondere gegeben, wenn bei einem automatisierten Schaltgetriebe, eine für den Schaltvorgang bestimmte Drehzahl durch den allgemeinen Drehzahlregler eingeregelt wird. Entsprechendes gilt auch für einen Drehzahlregler, wenn die Fahrvorgabe des Fahrerwunsches als Solldrehzahl interpretiert wird. Dies gilt insbesondere für spezielle Anwendungen im Nutzfahrzeugbereich.

Üblicherweise wird jede der genannten Funktionalitäten durch einen eigenen Regler realisiert. Diese Regler haben im Allgemeinen unterschiedliche Eingriffspunkte. Probleme treten auf, wenn zeitgleich mehrere Regler im Eingriff sind. Dies führt zu Instabilitäten. Ferner treten Probleme beim Umschalten von einer zur anderen Funktionalität auf. Ein Beispiel ist das Ablösen der Leerlaufregelung durch eine Arbeitsdrehzahlregelung. Hierbei tritt die Problematik auf, dass der Stellereingriff des ersten Reglers geeignet in den zweiten zu übernehmen ist. D. h. die Initialisierung der einzelnen Regler beim Übergang ist problematisch.

Erfindungsgemäß wird deshalb ein Drehzahlintervallregler vorgeschlagen, der unabhängig vom steuernden Eingriff der Regler ein Verlassen des Drehzahlintervalles verhindert. Im Sonderfall der Intervallbreite 0 kompensiert der Regler den Steuereingriff zur Einhaltung der Solldrehzahl vollständig. Im allgemeinen Fall einer unendlichen Intervallbreite verhält sich der Regler möglichst neutral, wenn sich die Drehzahl aufgrund des steuernden Eingriffs oder aufgrund anderer Störgrößen innerhalb der Intervallgrenzen befindet. Ein solcher Drehzahlregler ist bei geeigneter Beschaltung der Intervallgrenzen, d. h. bei einer geeigneten Vorgabe der Sollwerte in der Lage, alle oder auch nur einen Teil der oben genannten Funktionalitäten zu realisieren.

Vorteilhaft hierbei ist es, dass Ressourcen sowohl im Steuergerät als auch bei der Entwicklung und der Applikation eingespart werden können, da nur ein Regler benötigt wird. Verbesserungen, die für eine Funktionalität vorgenommen werden, kommen auch den anderen Funktionalitäten zugute. Bei konkurrierenden Funktionalitäten kann eine eindeutige Priorisierung auf Ebene der Sollwertbestimmung erfolgen. Ein überlagerter Eingriff mehrerer Regler ist ausgeschlossen. Die Ablösung einer Funktionalität durch eine andere ist einfacher zu gewährleisten. Eine Initialisierung muß nur bei einem Regler, und nicht bei mehreren Reglern erfolgen.

Erfindungsgemäß ist vorgesehen, dass ein Drehzahlintervallregler durch eine parallele Struktur zweier Regler realisiert wird. Vorzugsweise weisen die zwei parallelen Regler PI-Verhalten auf. Einer der beiden Regler regelt auf eine obere Intervallgrenze als oberen Sollwert NSO ein. Der andere Regler regelt auf die untere Intervallgrenze als unterer Sollwert NSU ein. In jedem der Signalpfade wird der Stelleingriff so begrenzt, dass das zulässige Sollwertintervall nicht verlassen wird.

Unter der Voraussetzung eines positiven Streckenverhaltens, d. h. eine Erhöhung der Stellgröße führt zu einer Erhöhung der Regelgröße, bedeutet dass für die beiden Regelpfade, dass der Reglerpfad für die Drehzahluntergrenze nur erhöhend eingreift. Die Untergrenze seines Stelleingriffes ist damit 0. Als Obergrenze wirkt vorzugsweise der im aktuellen Betriebspunkt zulässige Stelleingriff. Der Reglerpfad für die Drehzahlobergrenze kann nur verringernd eingreifen. Die Obergrenze seines Stelleingriffes ist 0. Als Untergrenze kann beispielsweise der aktuelle Steuerwert für den Stelleingriff dienen. Damit ist sichergestellt, dass bei Überschreiten der oberen Intervallgrenze der steuernde Stelleingriff durch den Reglereingriff aufgehoben werden kann. Durch das Zusammenwirken der beiden Reglerpfade sind sowohl erhöhende wie auch verringernde Eingriffe möglich. Dies gilt auch, wenn die obere und die untere Intervallgrenze gleich sind, d. h. der obere Sollwert NSO und der untere Sollwert NSU sind gleich. Mit diesen Vorgabewerten kann durch die selbe Struktur eine reine Drehzahlregelung realisiert werden. So ist z. B. ein Überdrücken des Steuerwertes bei einer Getriebesteuerung möglich.

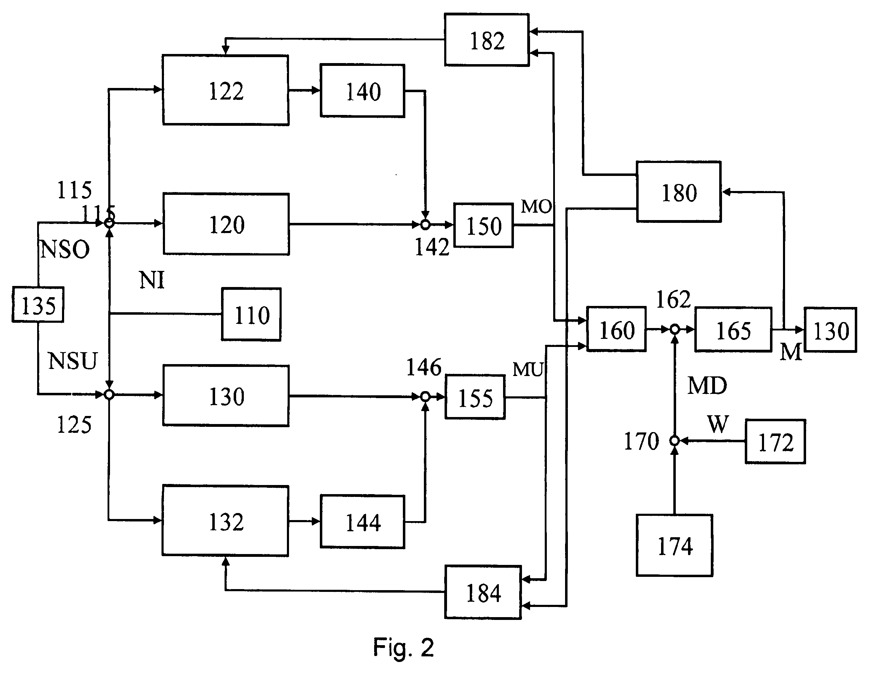

Eine entsprechende Reglerstruktur ist als Blockdiagramm in Figur 2 dargestellt. Bereits in Figur 1 beschriebene Elemente sind mit entsprechenden Bezugszeichen bezeichnet. Das Ausgangssignal NI des Drehzahlsensors 110 gelangt über einen ersten Verknüpfungspunkt 115 zu einem ersten P-Anteil 120 und einem ersten I-Anteil 122. Des Weiteren gelangt dieses Signal über einen zweiten Verknüpfungspunkt 125 zu einem zweiten P-Anteil 130 und einem zweiten I-Anteil 132.

Am zweiten Eingang des ersten Verknüpfungspunktes 115 liegt ein erstes Ausgangssignal NSO einer Sollwertvorgabe 135, und an dem zweiten Verknüpfungspunkt 125 liegt das Ausgangssignal NSO der Sollwertvorgabe 135 an.

Das Ausgangssignal des ersten Integralanteiles 122 gelangt über einen ersten Begrenzer 140 zu einem Verknüpfungspunkt 142. Am zweiten Eingang des Verknüpfungspunktes 142 liegt das Ausgangssignal des ersten P-Anteils 120. Das Ausgangssignal des zweiten Integralanteils 132 gelangt über einen zweiten Begrenzer 144 zu einem Verknüpfungspunkt 146, an dessen zweiten Eingang das Ausgangssignal des zweiten Proportionalanteils 130 anliegt.

Mit dem Ausgangssignal des Verknüpfungspunktes 142 wird ein erster Stellgrößenbegrenzer 150 beaufschlagt, dessen Ausgangssignal MO zu einer Aufschaltung 160 gelangt. Mit dem Ausgangssignal des Verknüpfungspunktes 146 wird ein zweiter Stellgrößenbegrenzer 155 beaufschlagt, dessen Ausgangssignal MU ebenfalls zur Aufschaltung 160 gelangt. Das Ausgangssignal der Aufschaltung 160 gelangt über einen Verknüpfungspunkt 162 zur Signalbegrenzung 165, mit dessen Ausgangssignal M das Stellelement 130 beaufschlagt wird bzw. ausgehend von dem ein Signal zur Beaufschlagung des Stellelements 130 berechnet wird.

Am zweiten Eingang des Verknüpfungspunktes 162 liegt das Ausgangssignal eines Verknüpfungspunktes 170, das zum Einen mit dem Ausgangssignal W einer Wichtungsvorgabe 172 und zum Anderen mit dem Signal eines Differenzialanteiles 174 beaufschlagt wird.

Das Ausgangssignal der Stellgrößenbegrenzung 165 gelangt ferner zu einer Startwertvorgabe 180, die wiederum eine erste Startwertvorgabe 182 und eine zweite Startwertvorgabe 184 beaufschlagt. Der ersten Startwertvorgabe 182 wird ferner das Ausgangssignal MO der ersten Stellgrößenbegrenzung zugeführt. Entsprechend wird der zweiten Startwertvorgabe 184 das Ausgangssignal MU der zweiten Stellgrößenbegrenzung 155 zugeführt.

Der Integralanteil 122, der erste Begrenzer 140 und der Proportionalanteil 120 bilden einen ersten Regler, der die Drehzahl auf die obere Intervallgrenze NSO regelt. Dabei begrenzt der Stellgrößenbegrenzer 150 das Ausgangssignal dieses Reglers auf negative Werte, d. h. dieser Regler besitzt lediglich einen das Moment verringernden Eingriff. D. h. der obere Grenzwert dieses Begrenzers nimmt den Wert 0 an.

Der Proportionalanteil (P-Anteil) 130 und der Integralanteil (I-Anteil) 132 sowie der zweite Begrenzer 144 bilden einen zweiten Regler, der die Drehzahl auf die untere Intervallgrenze NSU regelt. Dabei ist der Begrenzer 155 so ausgebildet, dass dieser Regler nur einen momentenerhöhenden Eingriff durchführen kann, d. h. das Ausgangssignal MU dieses Reglerzweiges ist derart begrenzt, dass der kleinste mögliche Wert 0 beträgt.

Die Aufschaltung 160 wählt dann ausgehend von diesen beiden Stellgrößen MU und MO die entsprechende Stellgröße aus. Diese wird im Verknüpfungspunkt 162 mit dem gewichteten Ausgangssignal eines D-Anteiles 174 korrigiert. Durch die Verwendung des D-Anteiles 174 ergibt sich eine verbesserte Regelgüte. Speziell bei Sollwertsprüngen oder Einschwingverhalten an einer Intervallgrenze hat dieser D-Anteil einen positiven Effekt auf das Regelverhalten. Diese Korrektur erfolgt lediglich in ausgewählten Betriebszuständen.

Bei geringem Abstand zwischen der unteren Intervallgrenze NSO und der oberen Intervallgrenze NSU, d. h. bei kleinen Abständen zwischen dem unteren Sollwert NSU und dem oberen Sollwert NSO, insbesondere wenn die beiden Sollwerte gleich sind, muss in bestimmten Betriebszuständen verhindert werden, dass beide Reglerpfade gleichzeitig dynamisch aktiv sind, d. h. dass beide Reglerpfade einen Momentenwunsch vorgeben. Dies wird mittels der Aufschaltung 160 gewährleistet. Stelleingriffe beider Reglerpfade, insbesondere in gleiche Richtung, d. h. mit gleichsinniger Änderung des Stelleingriffs, sind zu vermeiden, da es dadurch zu einer Addition beider Reglerverstärkungen kommt. Bei entsprechender Auslegung jedes Reglerpfades würde die gleichsinnige Überlagerung beider Reglerpfade aufgrund der zu großen Kreisverstärkung zu einem instabilen Verhalten führen.

Für die Aufschaltung der Stelleingriffe der parallelen Reglerkreise wird folgende Vorgehensweise verwendet. Bei gleichsinnigen Änderungen der Stelleingriffe wird derjenige Pfad dynamisch aufgeschaltet, d. h. zur Ansteuerung des Stellelementes verwendet, welcher die betragsmäßig größere Änderung aufweist. Der Integrator des jeweils anderen Pfades wird durch die entsprechende Startwertvorgabe 182 bzw. 184 derart gesetzt, dass sich der bei der aktuellen Regelabweichung zuletzt wirksame Eingriff wieder darstellt. Der inaktive Pfad wird damit quasi eingefroren.

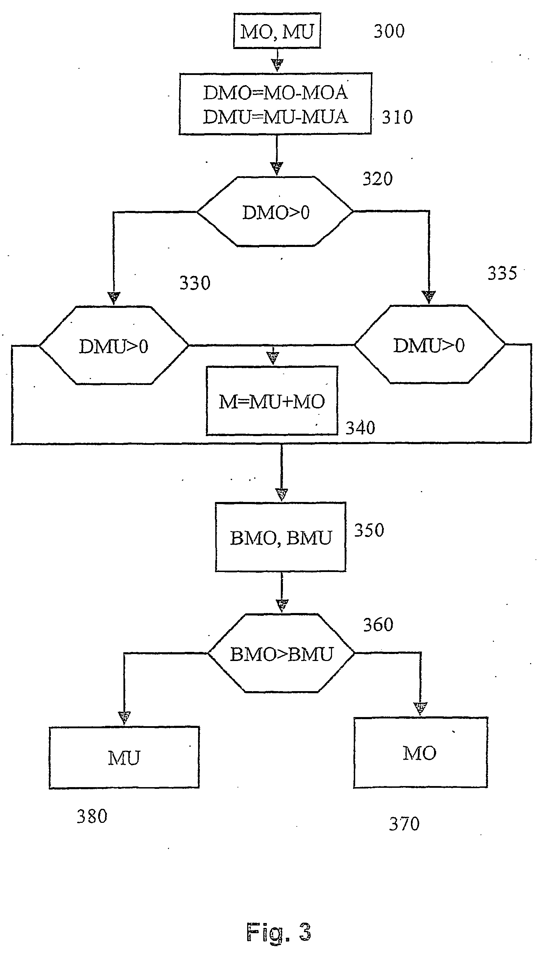

Eine entsprechende Vorgehensweise ist in Figur 3 dargestellt.

In einem ersten Schritt 300 werden von den Blöcken 120, 122, 140 und 142 die Stellgröße MO des ersten Pfades und von den Blöcken 130, 132, 144 und 146 die Stellgröße MU des zweiten Pfades bestimmt. Anschließend in Schritt 310 wird jeweils die Differenz DMO zwischen der neuen Stellgröße MO und die bei der letzten Berechnung berechneten Stellgröße MOA bestimmt. Entsprechend wird die Differenz DMO des zweiten Regelkreises, ausgehend von dem aktuellen Wert MU und dem vorangegangenen MUA bestimmt. Die sich anschließende Abfrage 320 überprüft, ob die Differenz DMO des ersten Regelkreises größer 0 ist, d. h. ob die Stellgröße MO ansteigt. Ist dies nicht der Fall, d. h. die Regelgröße fällt ab, so überprüft die Abfrage 330, ob die Differenz DMU größer 0 ist. D. h. es wird überprüft, ob die Regelgröße des zweiten Regelkreises ebenfalls ansteigt. Ist dies der Fall, d. h. die erste Stellgröße fällt ab und die zweite Stellgröße steigt an, so folgt Schritt 340. Erkennt die Abfrage 330, dass die zweite Stellgröße DMO ebenfalls abfällt, also kleiner 0 ist, so folgt Schritt 350. Erkennt die Abfrage 320, dass die erste Stellgröße ansteigt, d. h. die Differenz DMO ist größer 0, so folgt die Abfrage 335, die überprüft, ob die Differenz DMU der zweiten Stellgröße größer 0 ist. Ist dies der Fall, d. h. auch die zweite Stellgröße DMO steigt an, so folgt ebenfalls Schritt 350. Ist die zweite Stellgröße kleiner 0, d. h. die erste Stellgröße steigt an und die zweite Stellgröße fällt ab, folgt ebenfalls Schritt 340.

Dies bedeutet, sind die Änderungen der Stelleingriffe gegensinnig, d. h. die eine steigt an und die andere fällt ab, so folgt Schritt 340. Das heißt die beiden Stellgrößen werden zur Ausgangsgröße M addiert. Sind die Stellgrößen nicht gegensinnig, d. h. beide Stellgrößen steigen an bzw. beide Stellgrößen fallen ab, so wird in Schritt 350 jeweils der Betrag der Änderung der Stellgrößen bestimmt. Vorzugsweise werden die Größe BMO, die dem Betrag der Größe DMO entspricht, und die Größe BMU, die dem Betrag der Größe DMU entspricht, bestimmt. Die Abfrage 360 überprüft, ob die Größe BMO größer als die Größe BMU ist. Ist dies der Fall, d. h. der Betrag der Änderung der Stellgröße des ersten Regelkreises ist größer als der Betrag der Änderung des zweiten Regelkreises, so wird die Stellgröße MO des ersten Regelkreises in Schritt 370 zur Steuerung verwendet. Gleichzeitig wird der 1-Anteil des zweiten Regelkreises auf seinen vorhergehenden Wert eingefroren, d. h. der I-Anteil wird mit dem Wert MUA gesetzt.

Entsprechend wird, wenn die Größe BMO nicht größer ist als die Größe BMU, d. h. der Betrag der Änderung der zweiten Stellgröße ist größer als der Betrag der Änderung der ersten Stellgröße, so wird die Stellgröße des zweiten Regelkreises in Schritt 380 zur Steuerung verwendet und der I-Anteil 122 des ersten Regelkreises mit dem Wert MOA besetzt.

Dies bedeutet bei dieser vorteilhaften Ausgestaltung wird die Stellgröße mit der betragsmäßigen größten Änderung zur Ansteuerung verwendet, wenn beide Regler eine Stellgröße bereitstellen.

Der D-Anteil 174 ist nur in bestimmten Betriebszuständen aktiv. Beim Abschalten des D-Anteils 174 wird dessen Eingriff durch die I-Anteile 122 und/oder 132 übernommen, um einen sprungfreien Verlauf der Stellgröße M zu gewährleisten.

Die Aufteilung der Stellgröße des D-Anteils 174 auf die parallelen Pfade erfolgt durch die Startwertvorgabe 180.

Hierzu wird wie folgt vorgegangen: Zuerst wird überprüft, ob die Stellgröße MD des D-Anteils, insbesondere die gewichtete Stellgröße größer oder kleiner 0 ist. Ist die Stellgröße MD größer 0, so wird dem Integralanteil 122 so viel von MD zugewiesen, wie dies aufgrund der oberen Grenze 0 möglich ist. Der verbleibende Rest wird dem Integralanteil 132 zugewiesen.

Das beschriebene Regelkonzept ist allgemein einsetzbar auf Systeme, die einen steuernden Eingriff auf die Stellgröße des Reglers aufweist. Dabei ist die Vorgehensweise nicht auf eine Drehzahlregelung beschränkt. Die kann auch bei anderen Regelungen verwendet werden. Bei der Aufschaltung gemäß Block 160 sind auch andere Strategien denkbar. Z. B. kann eine Umschaltung der beiden Pfades nicht in Abhängigkeit des Betrages der Stellgröße, sondern in Abhängigkeit der Regelabweichungen, insbesondere dem Betrag der Regelabweichungen, erfolgen.

Instabilitäten beim gleichzeitigen Eingriff beider paralleler Pfade können auch durch ausgezeichnete Parameter, beispielsweise geringere Verstärkungsfaktoren oder durch eine dynamische Entkopplung vermieden werden.

Anstelle zweier paralleler Pfade kann die Funktionalität, insbesondere bei der Verwendung eines Rechners, durch die mehrfache Berechnung eines Pfads mit unterschiedlichen Parametern und/oder Grenzwerten erfolgen.

Für die Initialisierung im Block 180 sind auch andere Strategien denkbar. Es kann vorgesehen sein, dass mengenerhöhende Eingriffe in den zweiten Pfad, d. h. insbesondere in den Integrator 132 übernommen werden. Entsprechend werden für momentenverringernde Eingriffe in den ersten Pfad, insbesondere in den Integral-I-Anteil 122 übernommen. Vorzugsweise wird die Initialisierung so durchgeführt, dass möglichst kein Pfad in den Bereich der Begrenzung gelangt.

Anstelle der PI-Regler können auch andere Regelstrukturen insbesondere mit zusätzlichen Anteilen oder alternativen Anteilen verwendet werden.

Im beschriebenen Ausführungsbeispiel handelt es sich bei der Stellgröße um das Moment. Anstelle dieser Größe können auch andere Größen, die das Moment repräsentieren, verwendet werden. Insbesondere kann die Vorgehensweise auf die Einspritzmenge, die Drosselklappenstellung, den Zündwinkel für die Regelstangenposition oder Schieberwegposition bei kantengesteuerten Systemen erfolgen.

## Patentansprüche

1. Verfahren zur Regelung der Drehzahl der Brennkraftmaschine, mit wenigstens einem ersten Regler (120, 122, 140), der ausgehend von einem Vergleich (115) zwischen einem ersten Sollwert (NSO) und einem Istwert (NI) eine erste Stellgröße (MO) vorgibt, mit wenigstens einem zweiten Regler (130, 132, 144), der ausgehend von einem Vergleich (125) zwischen einem zweiten Sollwert (NSU) und dem Istwert (NI) eine zweite Stellgröße (MU) vorgibt, **dadurch gekennzeichnet dass** die erste Stellgröße (MO) derart auf einen ersten Stellbereich begrenzt wird, dass die zu regelnde Größe abnimmt und dass zweite Stellgröße (MU) derart auf einen zweiten Stellbereich begrenzt wird, dass die zu regelnde Größe zunimmt.

2. Verfahren nach Anspruch 1 oder 2, **dadurch gekennzeichnet, dass** der erste Sollwert (NSO) größer oder gleich dem zweiten Sollwert (NSU) ist.

3. Verfahren nach einem der vorherigen Ansprüche, **dadurch gekennzeichnet, dass** für den Fall dass beide Regler (120, 122, 140 130, 132, 144) eine Stellgröße (MU, MO) bereitstellen die Stellgröße (MU, MO) mit der betragsmäßigen größten Änderung zur Ansteuerung verwendet wird.

4. Verfahren nach Anspruch 4, **dadurch gekennzeichnet, dass** die Stellgröße mit der betragsmäßigen kleinsten Änderung eingefroren wird.

5. Verfahren nach einem der vorhergehenden Ansprüche, **dadurch gekennzeichnet, dass** in bestimmten Betriebszuständen die Stellgröße zusätzlich von einem wenigstens differenzielles Verhalten aufweisenden Regler (172) beeinflusst wird.

6. Vorrichtung zur Regelung der Drehzahl der Brennkraftmaschine, mit wenigstens einem ersten Regler(120, 122, 140), der ausgehend von einem Vergleich (115) zwischen einem ersten Sollwert (NSO) und einem Istwert eine (NI) erste Stellgröße (MO) vorgibt, mit wenigstens einem zweite Regler(130, 132, 144), der ausgehend von einem Vergleich (125) zwischen einem zweiten Sollwert (NSU) und dem Istwert (NI) eine zweite Stellgröße (MU) vorgibt, **dadurch gekennzeichnet dass** Mittel (150, 155) vorgesehen sind, die die erste Stellgröße (MO) derart auf einen ersten Stellbereich begrenzen, dass die zu regelnde Größe abnimmt und die die zweite Stellgröße (MU) derart auf einen zweiten Stellbereich begrenzen, dass die zu regelnde Größe zunimmt.

7. Computerprogramm mit Programmcode-Mitteln zur Anwendung eines Verfahren zum Betreiben einer Brennkraftmaschine nach mindestens einem der Ansprüche 1 bis 6, wobei alle Schritte von jedem beliebigen der Ansprüche 1 bis 6 durchgeführt werden, wenn das Programm auf einem Computer, insbesondere einem Steuergerät, ausgeführt wird.

## Claims

1. Method for controlling the speed of an internal combustion engine, having at least one first controller (120, 122, 140) which predefines a first manipulated variable (MO) on the basis of a comparison (115) between a first set point value (NSO) and an actual value (NI), having at least one second controller (130, 132, 144) which predefines a second manipulated variable (MU) on the basis of a comparison (125) between a second set point value (NSU) and the actual value (NI), **characterized in that** the first manipulated variable (MO) is limited to a first actuating range in such a way that the variable to be controlled decreases, and **in that** the second manipulated variable (MU) is limited to a second actuating range in such a way that the variable to be controlled increases.

2. Method according to Claim 1 or 2, **characterized in that** the first set point value (NSO) is greater than or equal to the second set point value (NSU).

3. Method according to one of the preceding claims, **characterized in that** if both controllers (120, 122, 140, 130, 132, 144) make available a manipulated variable (MU, MO), the manipulated variable (MU, MO) with the greatest change in absolute terms is used for the actuation.

4. Method according to Claim 4, **characterized in that** the manipulative variable with the smallest change in absolute terms is frozen.

5. Method according to one of the preceding claims, **characterized in that** in specific operating states the manipulated variable is additionally influenced by a controller (172) having at least a differential behaviour.

6. Device for controlling the speed of an internal combustion engine, having at least one first controller (120, 122, 140) which predefines a first manipulated variable (MO) on the basis of a comparison (115) between a first set point value (NSO) and an actual value (NI), having at least one second controller (130, 132, 144) which predefines a second manipulated variable (MU) on the basis of a comparison (125) between a second set point value (NSU) and the actual value (NI), **characterized in that** means (150, 155) are provided which limit the first manipulated variable (MO) to a first actuating range in such a way that the variable to be controlled decreases and which limit the second manipulated variable (MU) to a second actuating range in such a way that the variable to be controlled increases.

7. Computer program having program code means for applying a method for operating an internal combustion engine according to at least one of Claims 1 to 6, all the steps being carried out by any of the Claims 1 to 6 if the program is executed on a computer, in particular a control unit.

## Revendications

1. Procédé de régulation du régime du moteur à combustion interne, comprenant au moins un premier régulateur (120, 122, 140) qui détermine une première grandeur de réglage (MO) à partir d'une comparaison (115) entre une première valeur de consigne (NSO) et une valeur réelle (NI), et au moins un deuxième régulateur (130, 132, 144) qui détermine une deuxième grandeur de réglage (MU) à partir d'une comparaison (125) entre une deuxième valeur de consigne (NSU) et la valeur réelle (NI),
**caractérisé en ce que**
la première grandeur de réglage (MO) est limitée à une première plage de réglage de sorte que la grandeur à réguler diminue, et la deuxième grandeur de réglage (MU) est limitée à une deuxième plage de réglage de sorte que la grandeur à réguler augmente.

2. Procédé selon la revendication 1 ou 2,
**caractérisé en ce que**
la première valeur de consigne (NSO) est supérieure ou égale à la deuxième valeur de consigne (NSU).

3. Procédé selon l'une des revendications précédentes,
**caractérisé en ce que**
dans le cas où les deux régulateurs (120, 122, 140, 130, 132, 144) fournissent une grandeur de réglage (MU, MO), on utilise pour la commande la grandeur de réglage (MU, MO) présentant la plus grande valeur de variation.

4. Procédé selon la revendication 4,
**caractérisé en ce que**
la grandeur de réglage avec la plus petite valeur de variation est gelée.

5. Procédé selon l'une des revendications précédentes,
**caractérisé en ce qu'**
à des états de fonctionnement déterminés la grandeur de réglage est en outre influencée par un régulateur (172) présentant au moins un comportement différentiel.

6. Dispositif de régulation du régime du moteur à combustion interne, comprenant au moins un premier régulateur (120, 122, 140) qui détermine une première grandeur de réglage (MO) à partir d'une comparaison (115) entre une première valeur de consigne (NSO) et une valeur réelle (NI), et au moins un deuxième régulateur (130, 132, 144) qui détermine une deuxième grandeur de réglage (MU) à partir d'une comparaison (125) entre une deuxième valeur de consigne (NSU) et la valeur réelle (NI),
**caractérisé en ce que**
des moyens (150, 155) sont prévus pour limiter la première grandeur de réglage (MO) à une première plage de réglage de sorte que la grandeur à réguler diminue, et pour limiter la deuxième grandeur de réglage (MU) à une deuxième plage de réglage de sorte que la grandeur à réguler augmente.

7. Programme informatique comprenant des moyens de codage de programme pour la mise en oeuvre d'un procédé pour faire fonctionner un moteur à combustion interne selon au moins l'une des revendications 1 à 6, toutes les étapes étant exécutées selon l'une quelconque des revendications 1 à 6 si le programme est exécuté sur un ordinateur, en particulier un appareil de commande.
